# FASCICULE DE BREVET EUROPEEN

(11) **EP 3 538 245 B1**
(45) Date de publication et mention de la délivrance du brevet: **05.01.2022**
(21) Numéro de dépôt: 17804619.9
(22) Date de dépôt: 06.11.2017
(51) Int. Cl.: B01D 35/30, F02M 37/22

(54) **PARTIE DE VÉHICULE COMPRENANT UN FILTRE À GASOIL**
FAHRZEUGTEIL MIT DIESELFILTER
VEHICLE PART WITH A DIESEL FUEL FILTER

(30) Priorité: 14.11.2016 FR 1661002
(43) Date de publication de la demande: 18.09.2019
(73) Titulaire: Renault SAS, 92100 Boulogne-Billancourt (FR)
(72) Inventeur: EMERIC, Elisabeth, 78000 Versailles (FR)
(86) Numéro de dépôt international: PCT/FR2017/053022
(87) Numéro de publication internationale: WO 2018/087456

(56) Documents cités:
- FR-A1- 2 867 817
- KR-A- 19990 017 941
- US-A- 4 326 445
- US-A- 4 667 920
- US-A1- 2011 006 646

## Description

L'invention se rapporte à une partie de véhicule comprenant un filtre à gasoil.

Par le passé, le filtre à gasoil était fixé via un support soudé sur le réservoir à carburant, dans une zone placée sous la caisse du véhicule. Or, principalement pour des raisons de faisabilité technique, il n'est pas souhaitable de poursuivre ce type d'implantation, car elle présente une mauvaise tenue mécanique et génère des difficultés de mise au point, dues notamment à la fixation sur le réservoir de carburant.

De plus, l'implantation du filtre à gasoil dans le compartiment moteur d'un véhicule diesel présente un autre inconvénient : lors d'un impact accidentel du véhicule contre un obstacle, le filtre à gasoil est directement impacté et doit donc être renforcé, afin d'éviter qu'il ne se rompe.

Or, un tel renforcement a un impact négatif sur la masse et le coût de la voiture, et ne peut pas être réalisé de façon optimisée en raison d'un manque de place dans le compartiment moteur.

Une solution consiste à fixer le filtre à gasoil sur un élément de structure du véhicule. Ainsi, le document FR2867817 décrit des moyens de solidarisation du filtre à gasoil sur la caisse du véhicule. Autres documents pertinents sont US 4 326 445 A, US 2011/006646 A1, FR 2 867 817 A1, US 4 667 920 A et KR 1999 0017941 A.

Une partie de véhicule selon l'invention comprend un filtre à gasoil dont les caractéristiques de montage permettent de s'affranchir de tous les inconvénients relevés dans l'état de la technique.

L'invention a pour objet une partie de véhicule comprenant un réservoir à carburant, un filtre à gasoil et au moins un élément de structure situé dans une zone inférieure de la caisse et à proximité dudit réservoir.

La principale caractéristique d'une partie de véhicule selon l'invention, est que le filtre à gasoil est fixé au moins à un élément de structure au moyen d'un système de liaison indéformable, et apte à maintenir ledit filtre dans sa position d'origine, dans tous les cas d'usage du véhicule. Les cas d'usage du véhicule peuvent par exemple correspondre à de l'endurance, un choc accidentel du véhicule contre un obstacle extérieur, etc. Le principe de l'invention consiste d'une part, à placer le filtre à gasoil dans un endroit où il ne sera pas en prise directe avec un choc accidentel du véhicule, et d'autre part à le fixer fermement à un élément de structure du véhicule, qui est indépendant du réservoir à carburant, pour permettre de sauvegarder sa structure initiale et son positionnement initial. De cette manière, lors d'un tel choc accidentel, le filtre à gasoil sera préservé tant sur le plan de sa structure, que de son positionnement dans le véhicule, l'empêchant ainsi de se rompre, ou de constituer un projectile susceptible de détériorer le réservoir et/ou un circuit de circulation de carburant. Le terme « indéformable » signifie que la liaison est suffisamment robuste pour que le filtre à gasoil ne se déplace quasiment pas, ou au maximum de quelques millimètres lors de la vie du véhicule. Le filtre à gasoil est indépendant du réservoir de carburant mais est néanmoins situé au voisinage de celui-ci, c'est-à-dire à quelques centimètres au plus de celui-ci. L'expression « à proximité » signifie que l'élément de structure est également placé à quelques centimètres au plus du réservoir à carburant. Il est sous-entendu que le véhicule est un véhicule diesel. Une partie de véhicule selon l'invention est préférentiellement constituée d'une partie avant de véhicule. L'élément de structure est par exemple un élément fixe de la carrosserie dudit véhicule, comme par exemple un élément de soubassement, un longeron ou une parclose.

Le filtre à gasoil est fixé à un premier élément de structure à choisir parmi un longeron arrière et un élément de soubassement. Ce premier élément de structure est certes indépendant du réservoir de carburant, mais est situé à proximité de celui-ci de façon à le border.

De façon préférentielle, le filtre à gasoil est fixé au premier élément de structure par l'intermédiaire d'une pièce d'interface. Cette pièce d'interface est conçue par rapport à l'environnement immédiat du véhicule dans lequel elle sera insérée, pour notamment imposer un positionnement précis des points de fixation du filtre à gasoil sur le premier élément de structure. Cette pièce d'interface peut par exemple, être soudée, collée, clipsée ou vissée au premier élément de structure. Selon une autre variante de réalisation, cette pièce d'interface peut correspondre à une extension du filtre à gasoil, ledit filtre et ladite extension constituant alors une même pièce réalisée dans le même matériau.

Préférentiellement, la pièce d'interface est réalisée dans un matériau à choisir parmi un métal et un plastique. Cette pièce d'interface doit avoir une bonne tenue mécanique et ne doit pas se déformer dans le temps, tout en demeurant légère. Le métal peut par exemple être un acier.

De façon avantageuse, la fixation de la pièce d'interface au premier élément de structure est réalisée avec au moins une vis. Ce type de fixation est simple, bien maitrisée et efficace. Il est également facilement réversible.

Avantageusement, la liaison du filtre à gasoil sur la pièce d'interface est réalisée avec au moins une vis.

Le filtre à gasoil est fixé à un deuxième élément de structure à choisir parmi une parclose et un élément de soubassement. Cette deuxième fixation a pour but de renforcer l'arrimage du filtre à gasoil sur la structure du véhicule. Avantageusement, en association avec la première fixation au premier élément de structure, cette deuxième fixation sur le deuxième élément de structure permet de mieux répartir les efforts sur le filtre à gasoil afin d'assurer sa bonne tenue mécanique dans le temps (fiabilité, durabilité, endurance...) ainsi qu'un bon comportement lors des prestations du véhicule (acoustique, choc...). Ainsi, le filtre à gasoil ne risque pas d'être décroché et d'endommager les pièces environnantes.

Préférentiellement, la fixation du filtre à gasoil sur le deuxième élément de structure est réalisée avec au moins une vis.

De façon avantageuse, le premier et le deuxième élément de structure sur lesquels est fixé le filtre à gasoil sont situés de part et d'autre dudit filtre. Avantageusement, en association avec la première fixation au premier élément de structure, cette deuxième fixation sur le deuxième élément de structure permet de mieux répartir les efforts sur le filtre à gasoil afin d'assurer une bonne tenue mécanique et assurer toutes les prestations auxquelles doit répondre le véhicule (endurance, durabilité, acoustique, choc...).

L'invention a pour autre objet un kit de fixation d'un filtre à gasoil pour la réalisation d'une partie de véhicule selon l'invention.

La principale caractéristique d'un kit selon l'invention est qu'il comprend une pièce d'interface et un jeu de vis, les vis permettant d'une part de fixer ladite pièce d'interface à un premier élément de structure d'un véhicule et de fixer le filtre à gasoil à ladite pièce d'interface, et d'autre part de fixer ledit filtre à gasoil à un deuxième élément de structure dudit véhicule. De cette manière, un tel kit peut se décliner en plusieurs versions, chacune étant adaptée à un type de véhicule donné.

Une partie de véhicule selon l'invention présente l'avantage de comprendre un filtre à gasoil pleinement efficace, tout en limitant l'encombrement lié à son implantation sur le véhicule. Elle a de plus l'avantage d'être conçue de façon sécuritaire, en évitant que le filtre à gasoil ne puisse se rompre dans le cas d'un choc accidentel du véhicule contre un obstacle extérieur, et ne répande du carburant dans le compartiment moteur, et en évitant qu'il ne se transforme en projectile capable d'endommager les pièces situées dans son voisinage. Elle présente enfin l'avantage de permettre une purge facile du filtre à gasoil en après-vente, sans avoir à démonter un bouclier avant du véhicule.

On donne ci-après une description détaillée d'un mode de réalisation préféré d'une partie de véhicule selon l'invention, en se référant aux figures suivantes :
- La figure 1 est une vue agrandie du dessous d'une partie de véhicule selon l'invention,
- La figure 2 est une vue agrandie du dessous sous un autre angle de la partie de véhicule de la figure 1,
- La figure 3 est une vue générale du dessous d'une partie de véhicule selon l'invention.

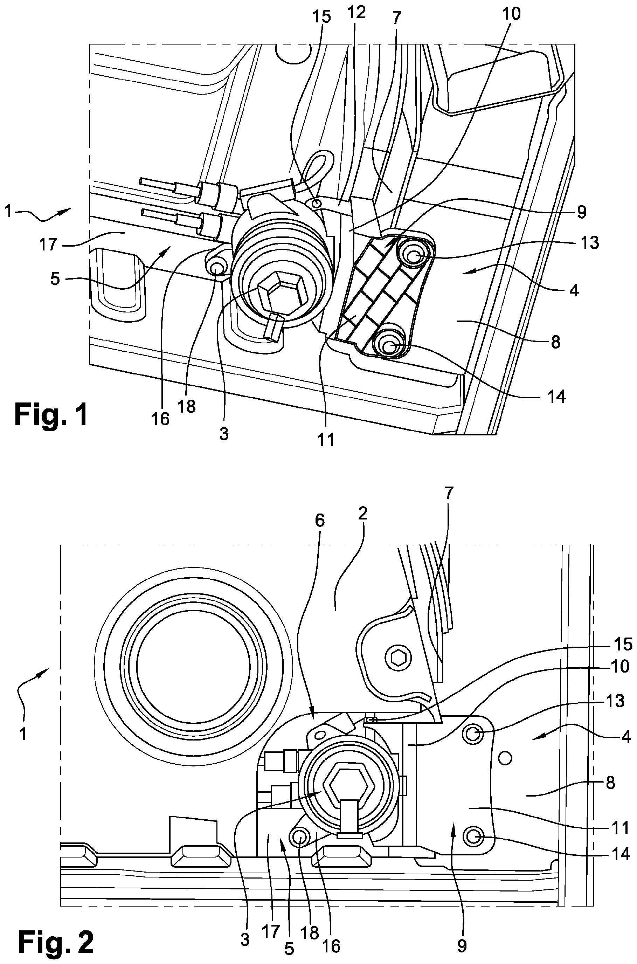

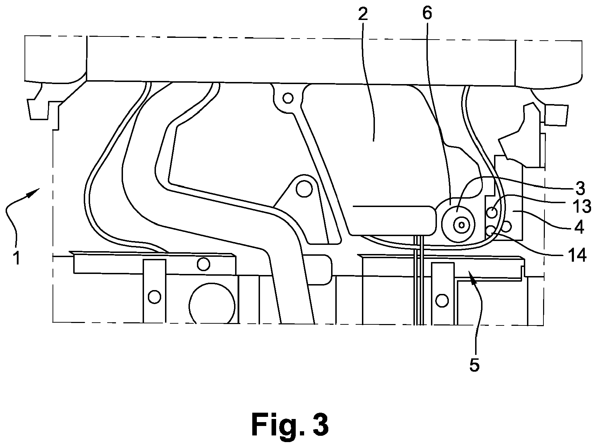

En se référant aux figures 1, 2 et 3 une partie de véhicule 1 selon l'invention est une partie avant d'un véhicule diesel, comprenant un réservoir à carburant 2, un filtre à gasoil 3, un longeron arrière 4, et une parclose 5. Le réservoir à carburant 2 définit une échancrure 6 s'étendant verticalement et le filtre à gasoil 3 est inséré dans cette échancrure 6 sans toucher ledit réservoir 2. Schématiquement, le filtre à gasoil 3 est cylindrique et est positionné dans l'échancrure 6 de sorte que son axe de révolution s'étende verticalement.

Le filtre à gasoil 3 est fixé à un premier élément de carrosserie fixe du véhicule, représenté par le longeron arrière 4, qui est une pièce allongée s'étendant selon un axe longitudinal du véhicule. Ce longeron 4 est creux, et présente une section transversale pouvant être carrée ou rectangulaire. Un tel longeron 4 possède ainsi deux faces consécutives 7, 8 qui sont perpendiculaires, et sur lesquelles vient se plaquer une pièce d'interface 9 destinée à assurer la solidarisation du filtre à gasoil 3 audit longeron 4. Cette pièce d'interface 9 comprend un segment central plan 10, prolongé à chacune de ses extrémités par un segment latéral 11, 12 plan, s'étendant chacun perpendiculairement audit segment central 10. Autrement dit, le segment central 10 possède deux faces opposées, et lesdits deux segments latéraux 11, 12 sont implantés sur chacune desdites faces dans des directions opposées.

L'un 11 des deux segments latéraux de la pièce d'interface 9 est disposé parallèlement à l'une 8 des faces du longeron 4, tandis que le segment central 10 de ladite pièce d'interface 9 est disposé parallèlement à l'autre face 7 dudit longeron 4. L'expression « disposé parallèlement » englobe la configuration pour laquelle les deux segments 10, 11 de la pièce d'interface 9 sont au contact des deux faces 7, 8 du longeron 4, et celle pour laquelle ils sont à distance de celles-ci. De cette manière, la pièce d'interface 9 et le longeron 4 présentent deux plans d'interface perpendiculaires. La pièce d'interface 9 est solidarisée au longeron au moyen de deux vis 13, 14 traversant le segment latéral 11 de ladite pièce 9.

En se référant aux figures 1 et 2, le filtre à gasoil 3 est également fixé à un deuxième élément de carrosserie fixe du véhicule, représenté par la parclose 5. En effet, le filtre à gasoil 3 comprend une patte de fixation 16 plane, qui vient au contact d'une surface 17 de la parclose 5 afin d'établir un contact surfacique avec celle-ci. Une vis 18 traverse cette patte de fixation 16 et la surface 17 de la parclose 5 contre laquelle elle vient au contact, pour établir une fixation robuste entre le filtre à gasoil 3 et ladite parclose 5.

Grâce à la combinaison d'un emplacement du filtre à gasoil 3 en partie basse de la caisse du véhicule, et d'une fixation solide et indéformable de ce filtre à gasoil 3 sur ladite caisse du véhicule, ledit filtre à gasoil 3 est préservé en cas de choc accidentel du véhicule contre un obstacle extérieur. En effet, en n'étant pas impacté directement par un tel choc, il ne se rompt pas et ne risque donc pas de répandre du carburant dans le compartiment moteur. De plus, en étant solidement arrimé à la caisse du véhicule, il ne risque pas de se transformer en projectile susceptible d'endommager le réservoir 2 à carburant du véhicule ou de couper un circuit de circulation dudit carburant. De plus, dans une telle configuration d'implantation sur la caisse du véhicule, le filtre à gasoil 3 n'engendre aucun encombrement significatif et est facilement accessible depuis l'extérieur du véhicule pour effectuer par exemple une purge, dans le cadre d'une intervention d'après-vente.

Un système de fixation d'un filtre à gasoil 3 pour la réalisation d'une partie de véhicule selon l'invention, permet une implantation volumique compacte n'affectant que très peu le volume du réservoir à carburant.

De plus, ce système de fixation permet un montage automatisé lors de l'assemblage du véhicule en usine de fabrication.

Enfin, n'étant pas implanté dans le compartiment moteur, le filtre à gasoil 3 est situé dans une zone peu impactée lors d'un crash du véhicule , ce qui permet d'économiser les renforcements nécessaires lorsque le filtre à gasoil est implanté dans le compartiment moteur.

## Revendications

1. Partie de véhicule (1) comprenant un réservoir (2) à carburant, un filtre à gasoil (3) et au moins un premier et deuxième éléments de structure (4, 5) situé dans une zone inférieure de la caisse et à proximité dudit réservoir (2), **caractérisée en ce que** le filtre à gasoil (3) est inséré dans une échancrure (6) du réservoir sans toucher celui-ci, et fixé au premier (4) et au deuxième (5) éléments de structure du véhicule, lesdits premier et deuxième éléments de structure étant distincts et situés de part et d'autre du filtre (3) au moyen d'un système de liaison indéformable assurant une fixation solide et indéformable du filtre sur la caisse du véhicule, de manière à maintenir ledit filtre (3) dans sa position d'origine dans tous les cas d'usage du véhicule.

2. Partie de véhicule selon la revendication 1 **caractérisée en ce que** le filtre à gasoil (3) est fixé à un premier élément (4) de structure à choisir parmi un longeron arrière et un élément de soubassement.

3. Partie de véhicule selon la revendication 2, **caractérisée en ce que** le filtre à gasoil (3) est fixé au premier élément (4) de structure par l'intermédiaire d'une pièce d'interface (9).

4. Partie de véhicule selon la revendication 3, **caractérisée en ce que** la pièce d'interface (9) est réalisée dans un matériau à choisir parmi un métal et un plastique.

5. Partie de véhicule selon l'une quelconque des revendications 3 ou 4, **caractérisée en ce que** la fixation de la pièce d'interface (9) au premier élément de structure (4) est réalisée avec au moins une vis (13, 14).

6. Partie de véhicule selon l'une quelconque des revendications 3 à 5, **caractérisée en ce que** la liaison du filtre à gasoil (3) sur la pièce d'interface (9) est réalisée avec au moins une vis (15).

7. Partie de véhicule selon l'une quelconque des revendications 1 à 6, **caractérisée en ce que** le filtre à gasoil (3) est fixé à un deuxième élément (5) de structure à choisir parmi une parclose et un élément de soubassement.

8. Partie de véhicule selon la revendication 7, **caractérisée en ce que** la fixation du filtre à gasoil (3) sur le deuxième élément (5) de structure est réalisée avec au moins une vis (18).

9. Partie de véhicule selon les revendications 2 et 7, **caractérisée en ce que** le premier (4) et le deuxième (5) élément de structure sur lesquels est fixé le filtre à gasoil (3) sont situés de part et d'autre dudit filtre (3).

10. Kit de fixation d'un filtre à gasoil (3) pour la réalisation d'une partie de véhicule (1) selon l'une quelconque des revendications 1 à 9, **caractérisé en ce qu'**il comprend une pièce d'interface (9) et un jeu de vis, et **en ce que** les vis (13, 14, 15, 18) permettent de fixer ladite pièce d'interface (9) à un premier élément (4) de structure d'un véhicule et de fixer le filtre à gasoil (3) à ladite pièce d'interface (9), et d'autre part de fixer ledit filtre (3) à gasoil sur un deuxième élément (5) de structure dudit véhicule.

## Patentansprüche

1. Fahrzeugteil (1), umfassend einen Kraftstofftank (2), einen Dieselfilter (3) und mindestens ein erstes und zweites Strukturelement (4, 5), das in einem unteren Bereich der Karosserie und in der Nähe des Tanks (2) gelegen ist, **dadurch gekennzeichnet, dass** der Dieselfilter (3) in einen Ausschnitt (6) des Tanks eingesetzt ist, ohne diesen zu berühren, und am ersten (4) und am zweiten (5) Strukturelement des Fahrzeugs befestigt ist, wobei die ersten und zweiten Strukturelemente verschieden sind und beidseits des Filters (3) mittels eines unverformbaren Verbindungssystems gelegen sind, das eine solide und unverformbare Befestigung des Filters an der Karosserie des Fahrzeugs gewährleistet, so dass der Filter (3) in allen Einsatzfällen des Fahrzeugs in seiner Ursprungsposition gehalten wird.

2. Fahrzeugteil nach Anspruch 1, **dadurch gekennzeichnet, dass** der Dieselfilter (3) an einem ersten Strukturelement (4) befestigt ist, das unter einem hinteren Längsträger und einem Unterbodenelement auszuwählen ist.

3. Fahrzeugteil nach Anspruch 2, **dadurch gekennzeichnet, dass** der Dieselfilter (3) am ersten Strukturelement (4) über ein Schnittstellenteil (9) befestigt ist.

4. Fahrzeugteil nach Anspruch 3, **dadurch gekennzeichnet, dass** das Schnittstellenteil (9) aus einem Material ausgeführt ist, das unter einem Metall und einem Kunststoff auszuwählen ist.

5. Fahrzeugteil nach einem der Ansprüche 3 oder 4, **dadurch gekennzeichnet, dass** die Befestigung des Schnittstellenteils (9) am ersten Strukturelement (4) mit mindestens einer Schraube (13, 14) ausgeführt wird.

6. Fahrzeugteil nach einem der Ansprüche 3 bis 5, **dadurch gekennzeichnet, dass** die Verbindung des Dieselfilters (3) am Schnittstellenteil (9) mit mindestens einer Schraube (15) ausgeführt wird.

7. Fahrzeugteil nach einem der Ansprüche 1 bis 6, **dadurch gekennzeichnet, dass** der Dieselfilter (3) an einem zweiten Strukturelement (5) befestigt ist, das unter einer Abdeckleiste und einem Unterbodenelement auszuwählen ist.

8. Fahrzeugteil nach Anspruch 7, **dadurch gekennzeichnet, dass** die Befestigung des Dieselfilters (3) am zweiten Strukturelement (5) mit mindestens einer Schraube (18) ausgeführt wird.

9. Fahrzeugteil nach den Ansprüchen 2 und 7, **dadurch gekennzeichnet, dass** das erste (4) und das zweite (5) Strukturelement, an denen der Dieselfilter (3) befestigt ist, beidseits des Filters (3) gelegen sind.

10. Bausatz zur Befestigung eines Dieselfilters (3) zur Ausführung eines Fahrzeugteils (1) nach einem der Ansprüche 1 bis 9, **dadurch gekennzeichnet, dass** er ein Schnittstellenteil (9) und einen Satz Schrauben umfasst und dass die Schrauben (13, 14, 15, 18) es ermöglichen, das Schnittstellenteil (9) an einem ersten Strukturelement (4) eines Fahrzeugs zu befestigen und den Dieselfilter (3) an dem Schnittstellenteil (9) zu befestigen, und zum anderen, den Dieselfilter (3) an einem zweiten Strukturelement (5) des Fahrzeugs zu befestigen.

## Claims

1. Vehicle part (1) comprising a fuel tank (2), a diesel fuel filter (3) and at least a first and second structural element (4, 5) located in a lower region of the body and close to said tank (2), **characterized in that** the diesel fuel filter (3) is inserted into a cutout (6) of the tank without touching the latter, and fastened to the first (4) and second (5) structural elements of the vehicle, said first and second structural elements being separate and located on either side of the filter (3) by means of a non-deformable connecting system ensuring firm and non-deformable fastening of the filter to the vehicle body, so as to keep said filter (3) in its original position in all the cases of use of the vehicle.

2. Vehicle part according to Claim 1, **characterized in that** the diesel fuel filter (3) is fastened to a first structural element (4) to be chosen from a rear side member and an underbody element.

3. Vehicle part according to Claim 2, **characterized in that** the diesel fuel filter (3) is fastened to the first structural element (4) by way of an interface component (9) .

4. Vehicle part according to Claim 3, **characterized in that** the interface component (9) is made from a material to be chosen from a metal and a plastic.

5. Vehicle part according to either one of Claims 3 and 4, **characterized in that** the interface component (9) is fastened to the first structural element (4) with at least one screw (13, 14).

6. Vehicle part according to any one of Claims 3 to 5, **characterized in that** the diesel fuel filter (3) is connected to the interface component (9) with at least one screw (15).

7. Vehicle part according to any one of Claims 1 to 6, **characterized in that** the diesel fuel filter (3) is fastened to a second structural element (5) to be chosen from a partition and an underbody element.

8. Vehicle part according to Claim 7, **characterized in that** the diesel fuel filter (3) is fastened to the second structural element (5) with at least one screw (18).

9. Vehicle part according to Claims 2 and 7, **characterized in that** the first (4) and second (5) structural elements to which the diesel fuel filter (3) is fastened are located on either side of said filter (3) .

10. Fastening kit for a diesel fuel filter (3) for producing a vehicle part (1) according to any one of Claims 1 to 9, **characterized in that** it comprises an interface component (9) and a set of screws, and **in that** the screws (13, 14, 15, 18) make it possible to fasten said interface component (9) to a first structural element (4) of a vehicle and to fasten the diesel fuel filter (3) to said interface component (9), and also to fasten said diesel fuel filter (3) to a second structural element (5) of said vehicle.
